# EUROPEAN PATENT SPECIFICATION

(11) **EP 3 977 861 B1**
(45) Date of publication and mention of the grant of the patent: **24.01.2024**
(21) Application number: 20200109.5
(22) Date of filing: 05.10.2020
(51) Int. Cl.: A23G 9/04, A23G 9/34, A23G 9/38, A23G 9/40

(54) **COMPOSITION OF LOW-FAT AND LOW-SUGAR ICE CREAM AND METHOD FOR PREPARING SUCH A COMPOSITION**
ZUSAMMENSETZUNG AUS FETTARMER UND ZUCKERARMER EISCREME UND VERFAHREN ZUR HERSTELLUNG EINER SOLCHEN ZUSAMMENSETZUNG
COMPOSITION DE CRÈME GLACÉE À FAIBLE TENEUR EN MATIÈRES GRASSES ET EN SUCRE ET PROCÉDÉ DE PRÉPARATION D'UNE TELLE COMPOSITION

(43) Date of publication of application: 06.04.2022
(73) Proprietor: Fedoruk, Aleksandr, Moscow (RU)
(72) Inventor: Fedoruk, Aleksandr, Moscow (RU); Vyacheslavov, Alexey, Yaroslavl (RU)
(74) Representative: Bugnion Genève

(56) References cited:
- WO-A1-2012/016816
- CN-A- 106 359 830
- CN-A- 110 613 046
- US-A1- 2003 113 436

## Description

The present invention relates to the field of frozen dairy products, i.e. ice creams that are low in fat and low in sugar.

Conventional ice creams are colloidal systems in which the fat, in particular milk, is dispersed by means of surfactants in an aqueous phase. Generally, the fatty phase comprises whole milk and, optionally, butter, cream or even vegetable fats, while the continuous aqueous phase comprises water and compounds soluble in water, in particular sugars or sweetening products, proteins and most of the stabilizers. Various surfactants may be used to form the emulsion such as egg yolk, sucrose and also monoglycerides or triglycerides.

CN 106 359 830 discloses a plain ice cream, which is prepared from the following raw materials in parts by weight: 37-47 parts of milk, 15-25 parts of butter, 5-15 parts of whole milk powder, 10-20 parts of sweet condensed milk, 1-10 parts of sweetener and 0.5-1.5 parts of egg yolk powder.

When making ice cream, the various ingredients are mixed vigorously and are said to be whipped, the mixture is then pasteurized and homogenized before freezing. Then, upon freezing, the mixture is subjected to accelerated beating to incorporate air bubbles and thus result in a foamed end product with a soft texture.

Ice creams generally contain more than 10% and up to 20% by weight of milk and possibly vegetable fat, as well as 10% to 20% of sugars, mainly in the form of sucrose and lactose.

However, for health reasons: allergies, intolerances and aesthetics, such as avoiding weight gain, less sweet and low-fat food products are nowadays in high demand. The field of ice cream is no exception to this rule.

In addition, consumers are also vigilant with regard to the composition of foods and, in particular, to the presence of synthetic products, or such synthetic products as are conventionally used in the preparation of ice cream, in particular as emulsifiers or stabilizers.

Ice creams obtained from natural products, entering into a healthy diet, and prepared according to inexpensive processes are often sought after.

Low-fat ice creams are already on sale. In order to maintain their particular structure, manufacturers generally use substitute products intended to replace fatty ingredients such as whole milk by other less fatty, less caloric, and sugars by sweeteners, however the general composition of these ice creams, in terms of the family of ingredients, does not vary substantially.

Furthermore, not all low-fat ice creams are satisfactory in terms of appearance, consistency, substance and/or taste.

Faced with the technical problem of obtaining an ice cream reduced in sugar and fat while providing a structure and a consistency in accordance with requirements, the inventors have proposed a very different system which does not consist of a simple substitution of each of the conventional components of the ice creams.

In addition, the inventors have succeeded in developing an ice cream that is light, rich in taste, and with high nutritional value, by favoring the use of natural ingredients.

The composition according to the present invention is advantageously prepared almost exclusively from natural ingredients.

According to a first object, the present invention relates to an ice cream composition that is reduced in fat, that is comprising a total fat content of less than 3.3% by weight, and reduced in sugar and comprises 20% to 40% by weight of solids that are soluble in water, of which:
- from 8.00% to 11.00% by weight of whole milk powder;
- from 0.10% to 1.00% by weight of powdered egg yolks;
- from 0.10% to 2.00% of at least one natural gum by weight, and -from 60% to 70%v by weight water
   to the total weight of the composition.

The ice cream according to the present invention is advantageously low in calories: its calorie content is less than 87 kCal/100g for chocolate ice creams and 70 kCal/100g for ice creams with other flavors.

In general, the calorie content of the ice creams according to the invention is less than 87 kCal/100g.

Unlike ice creams of the prior art in which each ingredient has a precise function, the ingredients of the ice cream compositions according to the invention are judiciously chosen so as to fulfill several functions such as participating in the texture/structure, contributing to the freezing temperature, to the flavor of the final product, while, in addition, the bulk of the ingredients contribute to the total amount of soluble solids.

The ice cream composition according to the present invention does not correspond to a conventional colloidal system in which the main ingredient confers its consistency on the composition, but rather corresponds to a composition in which the consistency is ensured by the presence of an amount of particular solids that are soluble in water, in particular the presence of egg yolk and natural gums, allowing the use of whole milk in a smaller amount compared to the amounts conventionally used.

The present invention also relates to a method for preparing the composition according to the invention comprising the following steps, in the given order:
- mix the soluble solids in water, and water at a temperature ranging from 40°C to 60°C;
- optionally, filter and pasteurize the mixture obtained;
- optionally add flavoring agents and/or additives;
- whip the mixture so obtained;
- freeze the whipped mixture at a temperature ranging from -12°C to -6°C.

The method according to the invention may be implemented in a simple manner, by means of products and equipment available on the market, and generally used by ice cream production companies, wherein the composition according to the invention may be prepared without generating costs that are too high.

Other objects, aspects, advantages, properties of the present invention are presented in the detailed description and the examples which follow.

### Detailed description

Surprisingly and advantageously, the inventors have demonstrated a new composition of ingredients making it possible to obtain an ice cream that is low in fat and sugar, and offering a soft, creamy and airy consistency.

Said composition according to the invention is based on a system comprising a substantial amount of soluble solids and combining, in relatively small amounts of whole milk powder, powdered egg yolk and at least one natural gum.

Surprisingly and advantageously, the use of powdered whole milk, powdered egg yolk and at least one natural gum in specific quantities makes it possible to obtain an ice cream of very satisfactory appearance, exhibiting an adequate consistency/structure, and not melting too quickly.

Said composition makes it possible to obtain a light ice cream, the appearance and taste of which are preserved during the time of consumption, i.e. between 1 and 15 minutes at a temperature ranging from 15°C to 40°C.

The terms "ingredient" and "component" in connection with the composition according to the invention are used interchangeably in the present description.

By "low in fat" within the meaning of the present invention, is meant an ice cream comprising a total fat content of less than 3.3% by weight, preferably 2.7% by weight.

For the purposes of the present invention, the term "low in sugar" means an ice cream comprising less than 6% by weight of lactose, and free of sucrose.

For the purposes of the present description, the term "sucrose-free composition" means a composition which does not substantially comprise sucrose, the only traces of this sugar being provided by the other ingredients used, or by the device used to implement the method.

Likewise, the composition according to the present invention is free from glucose.

The composition according to the present invention preferably and predominantly comprises water and water-soluble solids.

The ice cream according to the present invention advantageously comprises spring or mineral water.

The composition according to the present invention comprises from 60% to 70%, preferably from 64% to 68% by weight of water relative to the total weight of the composition.

### Soluble solids

For the purposes of the present description, the term "water-soluble solid" means a solid at 20°C of which 1 gram dissolves in less than a minute when placed in 10 ml of water at 20°C.

More specifically, 1 gram of said water-soluble solid is placed in a beaker and 10 ml of distilled water, at 20°C, is added with stirring corresponding to 600 rpm (revolutions per minute). The mixture is then filtered through a sintered glass filter whose pores have a maximum size of 20 microns. The collected filtrate is dried by a conventional method and the weight of the remaining material is determined.

For water-soluble solids defined according to the invention, there is no filtrate as the weight of the material remaining in the sintered glass is zero.

In particular, by "water-soluble solids" within the meaning of the present description, is meant powdered whole milk, powdered egg yolk, natural gums, and, if present, the following powdered ingredients: skimmed milk powder, inulin, albumin powder, cocoa powder, and sweeteners, in particular erythritol.

The composition according to the present invention comprises 20% to 40%, preferably 25% to 35%, by weight of water-soluble solids relative to the total weight of the composition.

### Milk

Milk is the component which generally gives its specific character to classic ice creams. The ice cream according to the present invention comprises powdered milk, preferably cow's milk, generally in the form of whole milk and skimmed milk.

By "skimmed milk" is meant a milk in which the fat content is at most 0.3% by weight.

By "whole milk" is meant a milk with a fat content ranging from 3.50% to 5.2% by weight.

The milk is used in the form of powdered milk thus contributing to the amount of water-soluble solids.

In addition, the ice cream according to the present invention advantageously does not include milk cream or butter.

Preferably, the ice cream according to the present invention comprises from 8.00% to 11.00% by weight, preferably from 9.00% to 10.50% by weight of whole milk powder.

Preferably, the ice cream according to the present invention comprises from 3.50% to 5.50% by weight, preferably from 4.00% to 5.00% by weight, of skimmed milk powder.

Preferably, the ratio by weight of whole milk : skimmed milk of the ice cream according to the present invention is from 1.5:1 to 2.5:1. Preferably, the weight ratio of whole milk : skimmed milk ice cream, is 2:1.

The amounts of whole milk and of skimmed milk are chosen such that the total fat content of the ice cream is less than 3.3% by weight.

### Powdered egg yolk

The composition according to the present invention comprises powdered egg yolk. The egg yolk includes lecithin which is a lipid with emulsifying properties which helps to stabilize the composition.

Preferably, the ice cream according to the present invention comprises from 0.10% to 1.00%, preferably from 0.20% to 0.80% by weight of powdered egg yolk relative to the total weight of the composition.

Advantageously the ratio, by weight of powdered egg yolk : powdered whole milk according to the present invention ranges from 0.035 to 0.045, preferably from 0.040 to 0.045.

### Powdered albumin

The composition according to the present invention also comprises albumin, preferably in the form of egg white. Albumin is preferably the main bulking agent as it brings volume and lightness to the composition during the beating step of the composition.

The composition according to the present invention comprises 0.15% to 0.30% by weight of powdered albumin relative to the total weight of the composition.

Preferably, the composition according to the present invention also comprises salt, in particular sodium chloride, NaCl, in an amount ranging from 0.01% to 0.10% by weight relative to the total weight of the composition. The salt helps to improve the preservation of the whipped composition.

### Sweeteners

Advantageously, the composition according to the present invention comprises at least one sweetener which makes it possible to give the composition its sweetness. Preferably, the composition according to the present invention comprises a strong sweetener in a small amount and a weak sweetener in a high amount.

By "strong sweetener" is meant a product whose sweetening power is at least 200 times greater than that of sucrose. For example, strong sweeteners that may be used are acesulfame K and sucralose.

By "weak sweetener" is meant a product whose sweetening power is lower than that of sucrose. Preferably, erythritol is used as a weak sweetener.

Preferably the composition according to the present invention comprises a mixture of acesulfame K and erythritol, while preferably the composition according to the present invention comprises from 0.001% to 0.015% by weight of acesulfame K and from 8.50% to 11.00 % by weight of erythritol, preferably 9.00% to 10.50%, by weight of erythritol.

Advantageously, the sweeteners are the only ingredients of the composition according to the present invention which are not natural products, i.e. which are not produced by a living organism, but by chemical synthesis.

### Dietary fiber

The composition according to the present invention also comprises dietary fibers in a content ranging from 5% to 10% by weight relative to the total weight of the composition.

Preferably, the dietary fibers are chosen from fructans and, in particular, inulin.

### Inulin

Inulin is a polysaccharide naturally produced by many types of plants from which it may be extracted. It belongs to a class of dietary fibers called fructans. Inulin is a prebiotic, i.e. it contributes to the growth of certain intestinal bacteria, and, as such, provides health benefits.

Inulin, in solid form, is soluble in water at room temperature. By ambient temperature, in the present description, is meant 20°C.

Inulin not only helps to increase the amount of solids in ice cream but also gives ice cream a gel-like consistency.

In addition, inulin also has a low sweetening-type sweetness.

The ice cream according to the present invention generally comprises from 3.33% to 10.00%, preferably from 7.00% to 9.00% by weight of inulin relative to the total weight of the composition.

In the particular case of chocolate-flavored ice cream containing cocoa, part of the inulin may be replaced by cocoa. In fact, cocoa is in the form of fibers. Advantageously, ice creams comprising cocoa according to the invention comprise from 3.33% to 6.67%, preferably from 4.70% to 6.00% and, advantageously, 5.00% by weight of inulin relative to the total weight of the composition and from 1.66% to 3.33%, preferably from 2.35% to 3.00% and, advantageously, 2.50% by weight of cocoa relative to the total weight of the composition.

In the particular case of ice creams not containing cocoa, the ice cream comprises from 5.00% to 10.00%, preferably from 7.00% to 9.00% by weight of inulin relative to the total weight of the composition.

### Natural gums

The composition according to the present invention also comprises at least one natural gum, i.e. a polysaccharide, preferably chosen from among the gums of guar, xanthan, carrageenan, acacia, konjac. Natural gums are generally used for their thickening properties, in particular gelling, stabilizing and emulsifying properties, advantageously in an amount ranging from 0.10% to 0.20% by weight.

Preferably, the composition comprises a mixture of guar gum and xanthan gum.

Preferably, the amount of guar gum is between 0.10% and 0.20% by weight relative to the total weight of the composition, while the amount of xanthan gum is between 0.01% and 0.10% by weight relative to the total weight of the composition.

### Flavoring agents

The ice cream according to the present invention advantageously comprises at least one flavoring agent, also called "perfume", which is not a dietary fiber. Preferably, the flavoring agent is chosen from among plant extracts and, in particular, extracts of vanilla, strawberry, pistachio, coffee, etc.

The flavoring agent may also be a synthetic agent. For vanilla flavored ice cream, ethyl vanillin may be used as a flavoring agent.

Generally, the composition according to the invention comprises from 0.010% to 0.050% by weight of flavoring agent(s) generally soluble in water.

### Additives

The ice cream according to the present invention advantageously comprises one or more additives such as colorings, preferably natural, and pieces of fruit, nuts such as hazelnuts, almonds, walnuts, pecans or macadamia nuts. Of course, the quantity of each of these additives will be adapted so as not to adversely affect the quality, in particular the consistency of the ice cream according to the invention.

These flavoring agents and/or additives will be added after the possible filtration and pasteurization step.

In particular, the composition according to the invention comprises, relative to the total weight of the composition:
- from 8.00% to 11.00% by weight of whole milk powder,
- from 3.50% to 5.50% by weight of skimmed milk powder,
- from 0.15% to 0.30% by weight of powdered albumin,
- from 0.20% to 0.60% by weight of powdered egg yolk,
- from 5.00% to 9.00% by weight of powdered inulin,
- from 0.10% to 0,20% by weight of guar gum,
- from 0.01% to 0.10% by weight of xanthan gum,
- from 9.00% to 10.5% by weight of erythritol,
- from 0.04% to 0.08% by weight of salt,
- from 0.005% to 0.015% by weight of acesulfame K, and
- from 60% to 70%, preferably 64% to 68% by weight of water.

Even more preferably, the composition according to the invention comprises, relative to the total weight of the composition:
- 9.50% by weight of whole milk powder,
- 4.60% by weight of skimmed milk powder,
- 0.26% by weight of powdered albumin,
- 0.39% by weight of powdered egg yolk,
- 7.70% by weight of powdered inulin,
- 0.13% by weight of guar gum,
- 0.05% by weight of xanthan gum,
- 9.30% by weight of erythritol,
- 0.06% by weight of salt,
- 0.01% by weight of acesulfame K,
- 0.02% by weight of vanilla flavor, preferably ethyl vanillin, and
- 67.98% by weight of water.

### Method

The present invention also relates to a method for preparing the composition according to the invention comprising the following steps.

The mixture of water-soluble solids and water at a temperature of 40°C to 60°C.

According to a preferred mode, the milk, the egg yolk, the albumin and the sweeteners are first mixed, then the dietary fibers, and then the natural gums are added. The components are mixed so as to obtain a homogeneous composition.

The composition is then preferably filtered.

Usually, the filtration step is performed with a 2x2mm (10⁻³m) and/or 1×1mm mesh sieve.

Then the mixture is pasteurized, usually at a temperature of 70°C for 30 minutes.

Said composition is then whipped, i.e. mixed vigorously so as to introduce air, before being frozen at a temperature ranging from -12°C to -6°C.

The implementation of the whipping step of the composition is within the competence of those skilled in the art.

Due to its simplicity, the method according to the invention may be implemented in a conventional ice cream production workshop without the need for special arrangements. Said method is also advantageous from an economic point of view.

The following examples illustrate the invention without limiting its scope.

### Examples:

In Table 1, the amounts of the ingredients are expressed in % by weight.

**Table 1**

| Ingredient | Example 1 | Example 2 | Example 3 |
|---|---|---|---|
| Whole milk powder | 9.50 | 9.50 | 10.300 |
| Skimmed milk powder | 4.60 | 4.60 | 5.000 |
| Albumin powder | 0.26 | 0.26 | 0.280 |
| Powdered egg yolk | 0.39 | 0.39 | 0.423 |
| Inulin | 7.70 | 5.15 | 8.350 |
| Guar gum | 0.13 | 0.13 | 0.141 |
| Xanthan gum | 0.05 | 0.06 | 0.052 |
| Erythritol | 9.30 | 9.30 | 10.100 |
| Salt | 0.06 | 0.06 | 0.065 |
| Acesulfame K | 0.01 | 0.01 | 0.010 |
| Azorubine (dye) | | | 0.005 |
| Vanilla flavoring agent: ethyl vanillin) | 0.02 | - | |
| Alkalized cocoa powder | | 2.58 | |
| Strawberry flavor agent | | | 0.044 |
| Water | 67.98 | 67.96 | 65.230 |

The ice creams of Examples 1 to 3 according to the present invention are prepared from the ingredients of Table 1 according to the following preparation method:
- whole and skimmed milk powder, powdered egg yolk, powdered albumin with salt, and sweeteners are first introduced into the water and mixed,
- the inulin, as well as the cocoa powder alkalized in Example 2, are then added;
- then the guar and xanthan gums are added;
- finally, the flavoring agents and azorubine are added in Example 3. The components are mixed so as to obtain a homogeneous composition.

The compositions are then filtered through a 2x2 mm (10⁻³m) and 1x1 mm mesh sieve.

The compositions are then pasteurized at a temperature of 70°C for 30 minutes.

The compositions are whipped before being frozen at a temperature of -10°C.

The light ice creams obtained have an airy appearance, consistent with that expected for an ice cream.

Upon tasting, their consistency is soft and smooth and their taste is satisfactory and in line with that is expected.

In addition, they do not melt too quickly, their structure is preserved for the duration of the tasting which can range from 5 to 15 minutes at 20°C.

## Claims

1. Ice cream composition reduced in fat, that is comprising a total fat content of less than 3.3% by weight, and reduced in sugar and comprising 20% to 40% by weight of water-soluble solids, of which:
- from 8.00% to 11.00% by weight of whole milk powder;
- from 0.10% to 1.00% by weight of powdered egg yolk;
- from 0.10% to 2.00% of at least one natural gum by weight, and
- from 60% to 70% by weight of water relative to the total weight of the composition.

2. Composition according to claim 1 comprising from 3.50% to 5.50% by weight of skimmed milk powder.

3. Composition according to claim 1 or 2 wherein the ratio by weight of egg yolk powder: whole milk powder is between 0.035 and 0.045.

4. Composition according to any preceding claim, wherein said at least one natural gum is a mixture of guar gum and xanthan gum.

5. Composition according to the preceding claim wherein the amount of guar gum is between 0.10% and 0.20% by weight relative to the total weight of the composition, while the amount of xanthan gum is between 0.01% and 0.10% by weight relative to the total weight of the composition.

6. Composition according to any one of the preceding claims, comprising powdered albumin in an amount of between 0.15% and 0.30% by weight relative to the total weight of the composition.

7. Composition according to any one of the preceding claims, comprising inulin in an amount between 3.33% and 10.00%, preferably from 7.00% to 9.00% by weight relative to the total weight of the composition.

8. Composition according to any one of the preceding claims, comprising acesulfame K in an amount between 0.001% and 0.015% by weight, and erythritol in an amount between 8.50% and 11.00% by weight relative to the total weight of the composition.

9. Composition according to any one of the preceding claims comprising:
- from 8.00% to 11.00% by weight of whole milk powder,
- from 3.50% to 5.50% by weight of skimmed milk powder,
- from 0.15% to 0.30% by weight of powdered albumin,
- from 0.20% to 0.60% by weight of powdered egg yolk,
- from 5.00% to 9.00% by weight of powdered inulin,
- from 0.10% to 0.20% by weight of guar gum,
- from 0.01% to 0.10% by weight of xanthan gum,
- from 9.00% to 10.5% by weight of erythritol,
- from 0.04% to 0.08% by weight of salt,
- from 0.005% to 0.015% by weight of acesulfame K, and
- from 60% to 70%, preferably 64% to 68% by weight of water.

10. Composition according to any preceding claim comprising:
- 9.50% by weight of whole milk powder,
- 4.60% by weight of skimmed milk powder,
- 0.26% by weight of powdered albumin,
- 0.39% by weight of powdered egg yolk,
- 7.70% by weight of powdered inulin,
- 0.13% by weight of guar gum,
- 0.05% by weight of xanthan gum,
- 9.30% by weight of erythritol,
- 0.06% by weight of salt,
- 0.01% by weight of acesulfame K,
- 0.02% by weight of vanilla flavor, preferably ethyl vanillin, and
- 67.98% by weight of water.

11. Method of preparing the composition according to any one of the preceding claims comprising the following steps, in this order:
- mix the soluble solids in water and water at a temperature ranging from 40°C to 60°C;
- optionally, filter and pasteurize the mixture so obtained;
- optionally add flavoring agents and/or additives;
- whip the mixture obtained;
- freeze the whipped mixture at a temperature ranging from -12°C to -6°C.

## Patentansprüche

1. Eiscremezusammensetzung mit reduziertem Fett, die einen Gesamtfettgehalt von weniger als 3,3 Gewichtsprozent umfasst, und reduziertem Zucker, und umfassend 20 bis 40 Gewichtsprozent wasserlösliche Feststoffe, darunter:
- von 8,00 bis 11,00 Gewichtsprozent Vollmilchpulver;
- von 0,10 bis 1,00 Gewichtsprozent Eigelbpulver;
- von 0,10 bis 2,00 Gewichtsprozent mindestens eines natürlichen Gummis, und
- von 60 bis 70 Gewichtsprozent Wasser mit Bezug auf das Gesamtgewicht der Zusammensetzung.

2. Zusammensetzung nach Anspruch 1, umfassend von 3,50 bis 5,50 Gewichtsprozent Magermilchpulver.

3. Zusammensetzung nach Anspruch 1 oder 2, wobei das Gewichtsverhältnis von Eigelbpulver zu Vollmilchpulver zwischen 0,035 und 0,045 liegt.

4. Zusammensetzung nach einem vorhergehenden Anspruch, wobei der mindestens eine natürliche Gummi eine Mischung aus Guargummi und Xanthangummi ist.

5. Zusammensetzung nach dem vorhergehenden Anspruch, wobei die Menge von Guargummi zwischen 0,10 und 0,20 Gewichtsprozent mit Bezug auf das Gesamtgewicht der Zusammensetzung ist, während die Menge von Xanthangummi zwischen 0,01 und 0,10 Gewichtsprozent mit Bezug auf das Gesamtgewicht der Zusammensetzung ist.

6. Zusammensetzung nach einem der vorhergehenden Ansprüche, umfassend Albuminpulver in einer Menge von zwischen 0,15 und 0,30 Gewichtsprozent mit Bezug auf das Gesamtgewicht der Zusammensetzung.

7. Zusammensetzung nach einem der vorhergehenden Ansprüche, umfassend Inulin in einer Menge zwischen 3,33 und 10,00 Gewichtsprozent, vorzugsweise von 7,00 bis 9,00 Gewichtsprozent mit Bezug auf das Gesamtgewicht der Zusammensetzung.

8. Zusammensetzung nach einem der vorhergehenden Ansprüche, umfassend Acesulfam-K in einer Menge zwischen 0,001 und 0,015 Gewichtsprozent und Erythritol in einer Menge zwischen 8,50 und 11,00 Gewichtsprozent mit Bezug auf das Gesamtgewicht der Zusammensetzung.

9. Zusammensetzung nach einem der vorhergehenden Ansprüche, umfassend:
- von 8,00 bis 11,00 Gewichtsprozent Vollmilchpulver,
- von 3,50 bis 5,50 Gewichtsprozent Magermilchpulver,
- von 0,15 bis 0,30 Gewichtsprozent Albuminpulver,
- von 0,20 bis 0,60 Gewichtsprozent Eigelbpulver,
- von 5,00 bis 9,00 Gewichtsprozent Inulinpulver,
- von 0,10 bis 0,20 Gewichtsprozent Guargummi
- von 0,01 bis 0,10 Gewichtsprozent Xanthangummi,
- von 9,00 bis 10,5 Gewichtsprozent Erythritol,
- von 0,04 bis 0,08 Gewichtsprozent Salz,
- von 0,005 bis 0,015 Gewichtsprozent Acesulfam-K, und
- von 60 bis 70, vorzugsweise 64 bis 68 Gewichtsprozent Wasser.

10. Zusammensetzung nach einem vorhergehenden Anspruch, umfassend:
- 9,5 Gewichtsprozent Vollmilchpulver,
- 4,60 Gewichtsprozent Magermilchpulver,
- 0,26 Gewichtsprozent Albuminpulver,
- 0,39 Gewichtsprozent Eigelbpulver,
- 7,70 Gewichtsprozent Inulinpulver,
- 0,13 Gewichtsprozent Guargummi
- 0,05 Gewichtsprozent Xanthangummi,
- 9,30 Gewichtsprozent Erythritol,
- 0,06 Gewichtsprozent Salz,
- 0,01 Gewichtsprozent Acesulfam-K,
- 0,02 Gewichtsprozent Vanillearoma, vorzugsweise Ethylvanillin, und
- 67,98 Gewichtsprozent Wasser.

11. Verfahren zur Zubereitung der Zusammensetzung nach einem der vorhergehenden Ansprüche, umfassend die folgenden Schritte in dieser Reihenfolge:
- Mischen der löslichen Feststoffe in Wasser und Wasser bei einer Temperatur im Bereich von 40 °C bis 60 °C;
- optional Filtern und Pasteurisieren der so erhaltenen Mischung;
- optional Zugeben von Aromastoffen und/oder Zusatzstoffen;
- Schlagen der erhaltenen Mischung;
- Gefrieren der geschlagenen Mischung bei einer Temperatur im Bereich von -12 °C bis -6 °C.

## Revendications

1. Composition de crème glacée allégée en matière grasse, comprenant une quantité totale de matière grasse inférieure à 3,3 % en poids, et allégée en sucre et comprenant 20% à 40% en poids de matières solides, solubles dans l'eau, dont :
- de 8,00% à 11,00% en poids de lait entier en poudre;
- de 0,10% à 1,00% en poids de jaune d'oeufs en poudre; et
- de 0,10% à 2,00% d'au moins une gomme naturelle en poids, et
- de 60% à 70% en poids d'eau par rapport au poids total de la composition.

2. Composition selon la revendication 1 comprenant de 3,50% à 5,50% en poids de lait écrémé en poudre.

3. Composition selon la revendication 1 ou 2 dans laquelle le rapport, en poids, jaune d'oeuf en poudre : lait entier en poudre est compris entre 0,035 et 0,045.

4. Composition selon l'une quelconque des revendications précédentes, dans laquelle ladite au moins une gomme naturelle est un mélange de gomme de guar et de gomme de xanthane.

5. Composition selon la revendication précédente dans laquelle la quantité de gomme de guar est comprise entre 0,10% et 0,20% en poids par rapport au poids total de la composition, et la quantité de gomme de xanthane est comprise entre 0,01% et 0,10% en poids par rapport au poids total de la composition.

6. Composition selon l'une quelconque des revendications précédentes, comprenant de l'albumine en poudre en une quantité comprise entre 0,15% et 0,30% en poids par rapport au poids total de la composition.

7. Composition selon l'une quelconque des revendications précédentes, comprenant de l'inuline en une quantité comprise entre 3,33% et 10,00%, de préférence de 7,00% à 9,00%, en poids par rapport au poids total de la composition.

8. Composition selon l'une quelconque des revendications précédentes, comprenant de l'acésulfame K en une quantité comprise entre 0,001% et 0,015% en poids et de l'érythritol en une quantité comprise entre 8,50% et 11,00% en poids, en poids par rapport au poids total de la composition.

9. Composition selon l'une quelconque des revendications précédentes comprenant :
- de 8,00% à 11,00% en poids de lait entier en poudre,
- de 3,50% à 5,50% en poids de lait écrémé en poudre,
- de 0,15% à 0,30% en poids d'albumine en poudre,
- de 0,20% à 0,60% en poids de jaune d'oeuf en poudre,
- de 5,00% à 9,00% en poids d'inuline en poudre,
- de 0,10% à 0,20% en poids de gomme de guar,
- de 0,01% à 0,10% en poids de gomme de xanthane,
- de 9,00% à 10,5% en poids d'érythritol,
- de 0,04% à 0,08% en poids de sel,
- de 0,005% à 0,015% en poids d'acesulfame K, et
- de 60% à 70%, de préférence de 64% à 68% en poids d'eau.

10. Composition l'une quelconque des revendications précédentes comprenant :
- 9,50% en poids de lait entier en poudre,
- 4,60% en poids de lait écrémé en poudre,
- 0,26% en poids d'albumine en poudre,
- 0,39% en poids de jaune d'oeuf en poudre,
- 7,70% en poids d'inuline en poudre,
- 0,13% en poids de gomme de guar,
- 0,05% en poids de gomme de xanthane,
- 9,30% en poids d'érythritol,
- 0,06% en poids de sel,
- 0,01% en poids d'acésulfame K,
- 0,02% en poids de saveur vanille, de préférence d'éthylvanilline, et
- 67,98% en poids d'eau.

11. Procédé de préparation de la composition selon l'une quelconque des revendications précédentes comprenant les étapes suivantes, dans cet ordre :
- mélanger les matières solides solubles dans l'eau et l'eau à une température allant de 40°C à 60°C;
- éventuellement, filtrer et pasteuriser le mélange obtenu ;
- éventuellement ajouter des agents de saveurs et/ou additifs ;
- fouetter le mélange obtenu ;
- congeler le mélange fouetté à une température allant de -12°C à -6°C.
